# EUROPÄISCHE PATENTANMELDUNG

(11) **EP 4 338 856 A1**
(43) Veröffentlichungstag der Anmeldung: **20.03.2024**
(21) Anmeldenummer: 22196410.9
(22) Anmeldetag: 19.09.2022
(51) Int. Cl.: B08B 1/00

(54) **VORRICHTUNG ZUM REINIGEN VON AUFLAGELEISTEN EINER ERSTEN WERKSTÜCKAUFLAGE EINER ERSTEN LASERSCHNEIDMASCHINE**

(71) Anmelder: Meyer BlechTechnik AG, 6022 Grosswangen (CH)
(72) Erfinder: MEYER, Urs, 6022 Grosswangen (CH)
(74) Vertreter: EGLI-EUROPEAN PATENT ATTORNEYS

(57) **Zusammenfassung**

Die Vorrichtung (1) zum Reinigen von Auflageleisten (2) einer ersten Werkstückauflage (3) einer ersten Laserschneidmaschine (4), welche erste Werkstückauflage (3) eine Mehrzahl von im Wesentlichen parallel zueinander verlaufend angeordneten und sich jeweils entlang einer Längsrichtung (5) erstreckenden Auflageleisten (2) umfasst, weist eine einen Reinigungskopf (12) tragende Tragestruktur (10) und einen Bewegungsmechanismus zum Bewegen des Reinigungskopfes (12) relativ zur Tragestruktur (10) auf. Der Bewegungsmechanismus weist ein Hubwerk zum Bewegen des Reinigungskopfes (12) in vertikaler Richtung und ein Längsfahrwerk zum Bewegen des Reinigungskopfes (12) entlang der Auflageleisten (2) auf. Die Tragestruktur (10) weist ein Fahrwerk zum Bewegen der Tragestruktur (10) auf einer Bodenfläche (8) entlang einer Querrichtung (18) auf, wodurch die Tragestruktur (10) quer zu den Auflageleisten (2) bewegbar ist. Die Tragestruktur (10) ist mittels des Fahrwerks (37, 38) zum Standort der ersten Laserschneidmaschine (4) hin und von diesem Standort weg verfahrbar und zu einem Standort einer zweiten Laserschneidmaschine (39) hin verfahrbar, um Auflageleisten (2) einer zweiten Werkstückauflage (40) der zweiten Laserschneidmaschine (39) zu reinigen.

## Beschreibung

### Technisches Gebiet

Die vorliegende Erfindung betrifft eine Vorrichtung zum Reinigen von Auflageleisten einer ersten Werkstückauflage einer ersten Laserschneidmaschine und ein Verfahren zum Reinigen von Auflageleisten einer ersten Werkstückauflage einer ersten Laserschneidmaschine.

### Stand der Technik

Werkstückauflagen von Laserschneidmaschinen weisen typischerweise eine Mehrzahl von parallel zueinander verlaufend angeordneten Auflageleisten zur Auflage von Werkstücken auf. Beim Schneiden eines Werkstücks mittels eines Lasers fallen Ablagerunen an den Auflageleisten an. Im Fall von Werkstücken, die ein metallisches Material aufweisen, das beim Schneiden des Werkstücks geschmolzen wird, entstehen besonders hartnäckige Ablagerungen an den Auflageleisten. Um die Auflageleisten mehrfach verwenden zu können, müssen diese gereinigt werden.

Aus der EP 2 338 616 B1 ist ein maschineller Auflageleisten-Reiniger zum Reinigen von Auflageleisten von Werkstückauflagen an Werkzeugmaschinen zum thermischen Schneiden von Werkstücken mit einem Reinigungsorganträger bekannt, an welchem wenigstens ein Reinigungsorgan vorgesehen ist und welchem bei der Reinigung einer Auflageleiste eine Seitenlängsfläche der Auflageleiste zugeordnet ist. Der Auflageleisten-Reiniger weist einen Quer-Antrieb auf, welcher bei der Reinigung einer Auflageleiste den Reinigungsorganträger und die Auflageleiste relativ zueinander quer zu einer dem Reinigungsorganträger zugeordneten Seitenlängsfläche der Auflageleiste periodisch aufeinander zu und voneinander wegbewegt. Außerdem weist der Auflageleisten-Reiniger einen Parallel-Antrieb auf, um den Reinigungsorganträger und die Auflageleiste mit einer periodischen Hubbewegung relativ zueinander zu bewegen, um Ablagerungen auf der Auflageleiste zu entfernen.

Aus der EP 1 655 081 B1 ist eine maschinelle Vorrichtung zum Reinigen von Auflageleisten von Werkstückauflagen bekannt. Die maschinelle Vorrichtung weist einen Vorschubantrieb mit einem Vorschuborgan auf, das zur Erzeugung der Vorschubbewegung an eine zu reinigende Auflageleiste angelegt wird. Auf diese Weise wird ein wesentlicher Anteil der Vorschubkraft nicht von einem Bediener der Vorrichtung, sondern von deren Eigenantrieb aufgebracht.

Aus der EP 2 082 813 B1 ist eine maschinelle Anordnung zur Reinigung von Auflageleisten einer Werkstückauflage mit einer Transportvorrichtung zur Bewegung der Werkstückauflage entlang einer Transportachse und mit einer Servicevorrichtung, welche ein Werkzeug zur Reinigung der Auflageleisten aufweist, bekannt. Die Servicevorrichtung ist entlang zweier jeweils senkrecht zur Transportrichtung verlaufender Richtungen bewegbar, wodurch eine Hubbewegung der Servicevorrichtung und eine Bewegung der Servicevorrichtung quer zu den Auflageleisten ermöglicht wird.

Aus der DE 10 2017 210 182 A1 ist eine Laserschneidmaschine mit einer Serviceeinrichtung zum Reinigen von Auflageleisten bekannt. Die Laserschneidmaschine weist einen Bewegungsmechanismus zum Bewegen der Serviceeinrichtung entlang dreier senkrecht zueinander verlaufender Richtungen auf.

### Zusammenfassung der Erfindung

Der vorliegenden Erfindung liegt die Aufgabe zugrunde, eine verbesserte Vorrichtung zum Reinigen von Auflageleisten von Werkstückauflagen von Laserschneidmaschinen bereitzustellen. Eine weitere Aufgabe besteht darin, ein verbessertes Verfahren zum Reinigen von Auflageleisten einer ersten Werkstückauflage einer ersten Laserschneidmaschine anzugeben. Diese Aufgaben werden gelöst durch eine Vorrichtung zum Reinigen von Auflageleisten einer ersten Werkstückauflage einer ersten Laserschneidmaschine mit den Merkmalen des Anspruchs 1 und durch ein Verfahren zum Reinigen von Auflageleisten einer ersten Werkstückauflage einer ersten Laserschneidmaschine mit den Merkmalen des Anspruchs 11.

Die Vorrichtung ist ausgebildet zum Reinigen von Auflageleisten einer ersten Werkstückauflage einer ersten Laserschneidmaschine, welche sich an einem vorgebbaren ersten Standort befindet, wobei die erste Werkstückauflage der ersten Laserschneidmaschine eine Mehrzahl von im Wesentlichen parallel zueinander verlaufend angeordneten und jeweils sich entlang einer Längsrichtung erstreckenden Auflageleisten zum Auflegen eines Werkstücks aufweist. Die Vorrichtung weist eine einen Reinigungskopf mit einem Reinigungswerkzeug zum Reinigen der Auflageleisten der ersten Werkstückauflage tragende Tragestruktur und einen Bewegungsmechanismus zum Bewegen des Reinigungskopfes relativ zur Tragestruktur auf. Der Bewegungsmechanismus weist ein Hubwerk zum Heben und Senken des Reinigungskopfes in einer vertikalen Richtung auf, um den Reinigungskopf auf die Auflageleisten der ersten Werkstückauflage aufzusetzen, sodass eine Auflageleiste mit dem Reinigungswerkzeug in Kontakt kommt, und um den Reinigungskopf nach dem Reinigen der Auflageleiste von den Auflageleisten der ersten Werkstückauflage abzuheben. Der Bewegungsmechanismus weist ein Längsfahrwerk zum Bewegen des Reinigungskopfes entlang der Längsrichtung auf, um den Reinigungskopf entlang der Auflageleisten der ersten Werkstückauflage zu bewegen. Die Tragestruktur weist ein Fahrwerk zum Bewegen der Tragestruktur auf einer Bodenfläche am ersten Standort entlang einer quer zur Längsrichtung verlaufenden Querrichtung auf, wodurch die Tragestruktur quer zu den Auflageleisten bewegbar ausgebildet ist, um den Reinigungskopf von Auflageleiste zu Auflageleiste zu bewegen, sodass mehrere Auflageleisten der ersten Werkstückauflage mittels des Reinigungskopfes sukzessive gereinigt werden können. Die Tragestruktur ist mittels des Fahrwerks derart über die Bodenfläche verfahrbar, dass die Tragestruktur zum ersten Standort der ersten Laserschneidmaschine hin verfahrbar ausgebildet ist, um Auflageleisten der ersten Werkstückauflage der ersten Laserschneidmaschine zu reinigen, und dass die Tragestruktur vom ersten Standort der ersten Laserschneidmaschine weg verfahrbar und zu einem vorgebbaren zweiten Standort einer zweiten Laserschneidmaschine hin verfahrbar ist, um mittels des Reinigungskopfes Auflageleisten einer zweiten Werkstückauflage der zweiten Laserschneidmaschine zu reinigen.

Vorteilhafterweise ermöglicht es die Vorrichtung, dass Auflageleisten von Werkstückauflagen vollautomatisiert gereinigt werden können, ohne dass die Vorrichtung bzw. die Tragestruktur oder der Reinigungskopf von einem Benutzer manuell bewegt werden müsste. Aus diesem Grund weist die Vorrichtung den Bewegungsmechanismus mit dem Hubwerk und dem Längsfahrwerk, um den Reinigungskopf vertikal und entlang der Auflageleisten bewegen zu können und das Fahrwerk auf, das es ermöglicht, die Tragestruktur samt Bewegungsmechanismus quer zu den Auflageleisten zu bewegen. Aufgrund der vollautomatisierten Reinigung der Auflageleisten können Werkstückauflagen vorteilhafterweise effizient und besonders schnell gereinigt werden.

Außerdem bietet die Vorrichtung den Vorteil, dass sie räumlich mobil ausgebildet ist und nicht ein Bestandteil einer Laserschneidmaschine selbst ist. Auf diese Weise können Werkstückauflagen unterschiedlicher Laserschneidmaschinen unabhängig vom Standort der Laserschneidmaschinen gereinigt werden. Dies wird durch das Fahrwerk ermöglicht, wodurch die Tragestruktur über die Bodenfläche verfahrbar ausgebildet ist. Bei der Vorrichtung handelt sich um ein autarkes System, das nicht von einer bestehenden Anlagen- Peripherie einer Laserschneidmaschine abhängig ist. Für eine Inbetriebnahme der Vorrichtung ist vorteilhafterweise keine technische Veränderung an der bestehenden Laserschneidmaschine erforderlich.

In einer Ausführungsform weist der Reinigungskopf eine Führungsplatte zur Auflage des Reinigungskopfs auf den Auflageleisten auf. Vorteilhafterweise wird durch die Führungsplatte beim Reinigen der Auflageleisten eine vertikale Position des Reinigungskopfes relativ zu den Auflageleisten vorgegeben bzw. definiert. Dadurch ist vorgegeben, wie weit der Reinigungskopf mittels des Hubwerks abgesenkt wird und wie weit eine Auflageleiste in das Reinigungswerkzeug eingreifen soll.

In einer Ausführungsform weist die Vorrichtung einen mit der Tragestruktur verbundenen und entlang der Auflageleisten ausrichtbaren Führungsarm auf. Der Reinigungskopf ist am Führungsarm derart geführt, dass der Reinigungskopf mittels des Längsfahrwerks entlang des Führungsarms (in Längsrichtung des Führungsarms) bewegbar ist. Das Längsfahrwerk kann dabei am Reinigungskopf angeordnet sein, um den Reinigungskopf entlang des Führungsarms zu bewegen. Alternativ kann auch die Tragestruktur das Längsfahrwerk aufweisen und der Reinigungskopf am Führungsarm befestigt sein, wobei das Längsfahrwerk ausgebildet ist, Führungsarm zusammen mit dem Reinigungskopf in der Längsrichtung zu bewegen. Alternativ kann der Führungsarm als eine teleskopartig ausfahrbare Struktur ausgebildet sein, welche den Reinigungskopf trägt und welche mittels des Längsfahrwerks in der Längsrichtung ausfahrbar ist, um den Reinigungskopf entlang der Längsrichtung zu bewegen.

In einer Ausführungsform ist der Führungsarm an der Tragestruktur innerhalb eines vorgebbaren Raumwinkels schwenkbar gelagert. Vorteilhafterweise ist eine Verbindung zwischen dem Führungsarm und der Tragestruktur dadurch flexibel und nicht starr ausgebildet. Diese Flexibilität kann die Vorrichtung vor Schäden bewahren, beispielsweise Schäden am Führungsarm, da beispielsweise beim Reinigen von erstarrten metallischen Ablagerungen an den Auflageleisten große Kräfte auf den Führungsarm und die Tragestruktur übertragen werden können.

In einer Ausführungsform weist das Reinigungswerkzeug des Reinigungskopfes zwei sich in Bezug auf die Querrichtung gegenüberliegende Reinigungsorgane zur Aufnahme einer der Auflageleisten auf. Die Reinigungsorgane sind jeweils entlang der Querrichtung und der vertikalen Richtung bewegbar ausgebildet, wodurch die Reinigungsorgane relativ zu quer zur Querrichtung verlaufenden Seitenflächen der einen der Auflageleisten bewegbar ausgebildet sind, um Ablagerungen an der einen der Auflageleisten mahlend und/oder schabend zu bearbeiten. Vorteilhafterweise können Ablagerungen mittels eines derart ausgebildeten Reinigungskopfes besonders effizient von den Auflageleisten entfernt werden.

In einer Ausführungsform ist die Tragestruktur zum Bewegen entlang der Querrichtung an eine auf einer Basis angeordnete und sich entlang der Querrichtung erstreckende Führungsschiene koppelbar. Vorteilhafterweise wird dadurch eine geradlinige Bewegung entlang der Querrichtung sichergestellt. Die Basis kann beispielsweise durch die Bodenfläche gebildet werden. Alternativ kann die Basis auch durch einen Abschnitt der ersten oder zweiten Laserschneidmaschine gebildet werden, der gegenüber der Bodenfläche erhöht ist. Eine Führungsschiene ist jedoch nicht erforderlich. Das Fahrwerk kann alternativ zum Bewegen der Tragestruktur entlang einer Führungslinie programmiert werden. Alternativ oder zusätzlich kann auch ein Laserstrahl zur Führung der Tragestruktur entlang der Querrichtung verwendet werden. Eine Führungsschiene ist nicht zwingend erforderlich.

In einer Weiterentwicklung vorstehend genannte Ausführungsform kann das Fahrwerk zumindest eine an einer der Bodenfläche zugewandten Unterseite der Tragestruktur angeordnete Führungsrolle umfassen, welche derart an die Führungsschiene koppelbar ist, dass die Tragestruktur mittels der Führungsrolle an der Führungsschiene geführt in Längsrichtung der Führungsschiene bewegbar ist. Vorteilhafterweise ist die Tragestruktur auf diese Weise besonders einfach entlang der Querrichtung bewegbar. Zur Kopplung der Führungsrolle mit der Führungsschiene kann die Führungsrolle beispielsweise eine Kerbe aufweisen, die zur Aufnahme der Führungsschiene vorgesehen ist. Es ist jedoch auch möglich, dass die Tragestruktur nicht mittels einer Führungsrolle mit der Führungsschiene gekoppelt wird. Beispielsweise kann die Tragestruktur eine Komponente mit einem Kugellager zum Eingriff in die Führungsschiene aufweisen.

In einer Ausführungsform weist die Tragestruktur einen Hebe-/ Senkmechanismus zum Absenken der Führungsrolle auf die Führungsschiene und zum Anheben der Führungsrolle von der Führungsschiene auf.

In einer Ausführungsform weist das Fahrwerk der Vorrichtung zumindest drei an einer der Bodenfläche zugewandten Unterseite der Tragestruktur angeordnete Rollen zum Verfahren der Tragestruktur auf der Bodenfläche auf. Dadurch ist die Tragestruktur räumlich mobil ausgebildet. Dies ermöglicht vorteilhafterweise den Einsatz der Vorrichtung an mehreren verschiedenen Standorten von mehreren Laserschneidmaschinen, welche separat voneinander an räumlich verteilt angeordneten Standorten platziert sein können.

In einer Ausführungsform ist zumindest eine der Rollen und/oder die zumindest eine Führungsrolle mittels des Fahrwerks antreibbar, um die Tragestruktur entlang der Führungsschiene zu bewegen.

Ein Verfahren zum Reinigen von Auflageleisten einer ersten Werkstückauflage einer ersten Laserschneidmaschine mittels einer erfindungsgemässen Vorrichtung umfasst folgende Verfahrensschritte: Die Tragestruktur wird zum Standort der ersten Laserschneidmaschine verfahren; die Tragestruktur wird derart ausgerichtet, dass der Reinigungskopf entlang der Auflageleisten bewegbar ist; der Reinigungskopf wird auf die Auflageleisten der ersten Werkstückauflage der ersten Laserschneidmaschine mittels des Hubwerks aufgesetzt, sodass eine der Auflageleisten mit dem Reinigungswerkzeug in Kontakt kommt; der Reinigungskopfe wird entlang der einen der Auflageleisten mittels des Längsfahrwerks bewegt, wobei die eine der Auflagenleisten gereinigt wird.

In einer Ausführungsform umfasst das Verfahren folgenden weitere Verfahrensschritte: Der Reinigungskopf wird von den Auflageleisten mittels des Hubwerks abgehoben; die Tragestruktur wird entlang der Querrichtung mittels des Fahrwerks bewegt, wobei der Reinigungskopf zu einer anderen der Auflagelisten hinbewegt wird; der Reinigungskopf wird auf die Auflageleisten der Werkstückauflage der ersten Laserschneidmaschine mittels des Hubwerks aufgesetzt, wobei das Reinigungswerkzeug mit der anderen der Auflageleisten in Kontakt kommt; der Reinigungskopf wird entlang der anderen der Auflageleisten mittels des Längsfahrwerks bewegt, wobei die andere der Auflagenleisten gereinigt wird.

In einer Ausführungsform umfasst das Verfahren folgende weiteren Verfahrensschritte: Der Reinigungskopfes wird von der ersten Werkstückauflage der ersten Laserschneidmaschine mittels des Hubwerks abgehoben; die Tragestruktur wird hin zu der zweiten Laserschneidmaschine verfahren und derart ausgerichtet, dass der Reinigungskopf entlang von Auflageleisten der zweiten Werkstückauflage der zweiten Laserschneidmaschine bewegbar ist; der Reinigungskopf wird auf die Auflageleisten der zweiten Werkstückauflage der zweiten Laserschneidmaschine mittels des Hubwerks aufgesetzt, wobei das Reinigungswerkzeug mit einer der Auflageleisten der zweiten Werkstückauflage in Kontakt kommt; der Reinigungskopf wird entlang der einen der Auflageleisten der zweiten Werkstückauflage der zweiten Laserschneidmaschine mittels des Längsfahrwerks bewegt, wobei Ablagerungen an der einen der Auflagenleisten der zweiten Werkstückauflage entfernt werden.

### Kurze Beschreibung der Zeichnungen

Weitere Einzelheiten der Erfindung und insbesondere beispielhafte Ausführungsformen der erfindungsgemässen Vorrichtung und des erfindungsgemässen Verfahrens werden im Folgenden anhand der beigefügten Zeichnungen erläutert. Es zeigen:
- Fig. 1: eine Vorrichtung zum Reinigen von Auflageleisten einer ersten Werkstückauflage einer ersten Laserschneidmaschine in einer perspektivischen Ansicht,
- Fig. 2: einen mit einem Führungsarm verbundenen Reinigungskopf der Vorrichtung der Fig. 1 in einer perspektivischen Ansicht,
- Fig. 3: eine Lagerung des Führungsarms an einer Tragestruktur der Vorrichtung der Fig. 1 in einer perspektivischen Ansicht,
- Fig. 4: eine Frontansicht auf die Vorrichtung der Fig. 1,
- Fig. 5: eine Seitenansicht auf die Vorrichtung der Fig. 1,
- Fig. 6: die Vorrichtung am Standort der ersten Laserschneidmaschine und eine zweite Laserschneidmaschine an einem anderen Standort in einer perspektivischen Ansicht und
- Fig. 7: Verfahrensschritte eines Verfahrens zum Reinigen von Auflageleisten von Werkstückauflagen von Laserschneidmaschinen.

### Beschreibung von Ausführungsformen

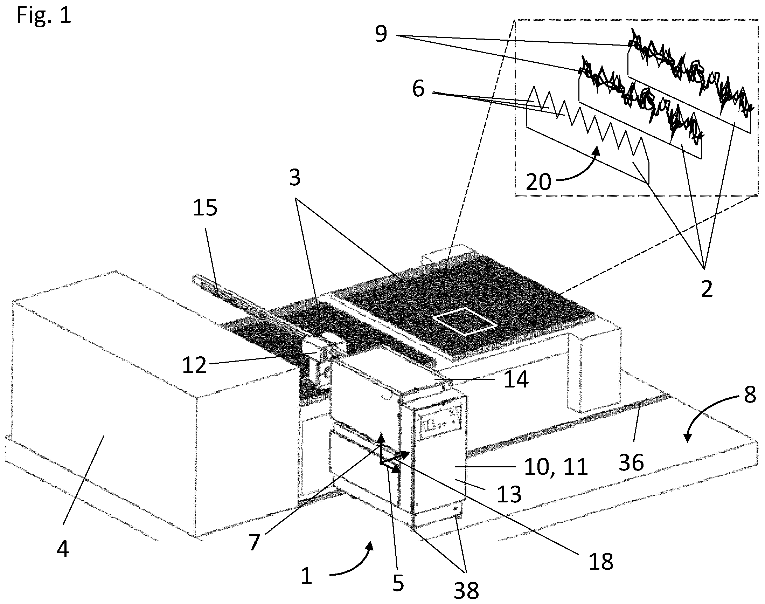

Fig. 1 zeigt schematisch eine Vorrichtung 1 zum Reinigen von Auflageleisten 2 einer ersten Werkstückauflage 3 einer ersten Laserschneidmaschine 4, die sich an einem vorgebbaren ersten Standort befindet, in einer perspektivischen Ansicht und eine Vergrößerung der ersten Werkstückauflage 3.

Wesentliche Elemente der ersten Laserschneidmaschine 1 sind in Fig. 1 der Übersicht halber nicht dargestellt. Die erste Laserschneidmaschine 4 ist dazu ausgebildet, ein Werkstück mittels eines Lasers zu bearbeiten. Dabei erfolgt ein Ablationsprozess eines Materials des Werkstücks. Das Werkstück kann beispielsweise ein metallisches Material aufweisen. Beim Laserschneiden kann das Werkstück mittels des Lasers durchtrennt werden.

Die erste Werkstückauflage 3 weist eine Mehrzahl von im Wesentlichen parallel zueinander verlaufend angeordneten und jeweils sich entlang einer Längsrichtung 5 erstreckenden Auflageleisten 2 zum Auflegen des Werkstücks auf. Die Auflageleisten 2 weisen beispielhaft ein metallisches Material auf, sie können jedoch auch ein anderes Material aufweisen. Die Auflageleisten 2 weisen Zähne 6 auf, die zur Auflage des Werkstücks dienen, wobei eine Kontaktfläche der Auflageleisten 2 zum Werkstück durch die Zähne 6 der Auflageleisten, die entlang einer senkrecht zur Längsrichtung 5 verlaufenden vertikalen Richtung 7 von einer Bodenfläche 8 am ersten Standort weg ragen, reduziert wird. Die in Fig. 1 gezeigte Anzahl der Zähne 6 ist lediglich beispielhaft gewählt, die Auflageleisten 2 können jeweils beliebig viele Zähne 6 aufweisen. Die Auflageleisten 2 müssen jedoch nicht notwendigerweise Zähne 6 aufweisen. Die Auflageleisten 2 können alternativ auch eine andere Struktur aufweisen, beispielsweise eine in vertikaler Richtung 7 gewellte Struktur.

Beim Laserschneiden liegt das Werkstück auf den Auflageleisten 2 auf. Das Werkstück schmilzt durch den Ablationsprozess lokal, wobei die jeweils erzeugte Schmelze teilweise auf die erste Werkstückauflage 3 gelangt, an der ersten Werkstückauflage 3 wieder erstarrt und dabei Ablagerungen 9 auf der ersten Werkstückauflage 3 bildet. In Fig. 1 sind in einer vergrösserten Darstellung eines Abschnitts der Werkstückauflage 3 beispielhaft drei Auflageleisten 2 gezeigt, von denen beispielhaft zwei Auflageleisten 2 Ablagerungen 9 aufweisen, die beim Laserschneiden angefallen sind.

Die Vorrichtung 1 weist eine Tragestruktur 10 auf. Die Tragestruktur 10 weist beispielhaft ein Gehäuse 11 auf, was jedoch nicht zwingend erforderlich ist. Es kann beispielswiese genügen, wenn die Tragestruktur 10 lediglich einen Rahmen aufweist. Die Tragestruktur 10 trägt einen Reinigungskopf 12 mit einem in der Darstellung der Fig. 1 nicht sichtbaren Reinigungswerkzeug zum Reinigen der Auflageleisten 2 der ersten Werkstückauflage 3.

Die Vorrichtung 1 weist einen Bewegungsmechanismus zum Bewegen des Reinigungskopfes 12 relativ zur Tragestruktur 10 auf. Der Bewegungsmechanismus weist ein (in den Figuren nicht dargestelltes) Hubwerk zum Heben und Senken des Reinigungskopfes 12 in vertikaler Richtung 7 auf, um den Reinigungskopf 12 derart auf die Auflageleisten 2 der ersten Werkstückauflage 3 aufzusetzen, dass eine Auflageleiste 2 mit dem Reinigungswerkzeug in Kontakt kommt. Nach dem Reinigen der Auflageleiste 2 kann der Reinigungskopf 12 mittels des Hubwerks von den Auflageleisten 2 der ersten Werkstückauflage 3 abgehoben werden.

Das Hubwerk ist innerhalb der Tragestruktur 10 angeordnet. Die Tragestruktur 10 weist einen unteren Abschnitt 13 und einen oberen Abschnitt 14 auf. Der Reinigungskopf 12 ist mit dem oberen Abschnitt 14 verbunden. Das Hubwerk ist dazu vorgesehen, den oberen Abschnitt 14 der Tragestruktur 10 in vertikaler Richtung 7 zu bewegen. Dadurch kann der Reinigungskopf 12 in vertikaler Richtung 7 relativ zu den Auflageleisten 2 bewegt werden. Es ist jedoch nicht zwingend erforderlich, dass die Tragestruktur 10 einen unteren und einen oberen Abschnitt 13, 14 aufweist, wobei der obere Abschnitt 14, mit dem der Reinigungskopf 12 verbunden ist, mittels des Hubwerks bewegbar ist. Fig. 1 zeigt einen optionalen Führungsarm 15, mit dem der Reinigungskopf 12 verbunden ist. Das Hubwerk kann beispielsweise auch dazu ausgebildet sein, lediglich den Führungsarm 15 in vertikaler Richtung 7 zu bewegen, wodurch der Reinigungskopf 12 ebenfalls in vertikaler Richtung 7 bewegbar ausgebildet ist. In der beispielhaften Darstellung der Fig. 1, bei der die Vorrichtung 1 den Führungsarm 15 aufweist, ist der Führungsarm 15 mit dem oberen Abschnitt 14 der Tragestruktur 10 verbunden und der obere Abschnitt 14 der Tragestruktur 10 kann mittels des Hubwerks in vertikaler Richtung 7 bewegt bzw. gehoben und gesenkt werden.

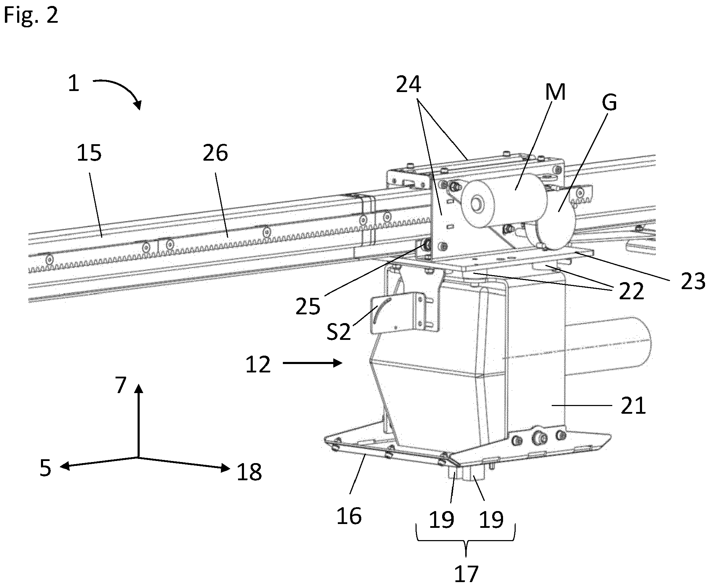

Fig. 2 zeigt schematisch den mit dem optionalen Führungsarm 15 verbundenen Reinigungskopf 12 im Detail in einer perspektivischen Ansicht. Die Bezugszeichen der Fig. 1 werden beibehalten.

Der Reinigungskopf 12 weist beispielhaft eine Führungsplatte 16 zur Auflage des Reinigungskopfs 12 auf den Auflageleisten 2 auf. Durch die Führungsplatte 16 wird festgelegt, inwieweit der Reinigungskopf 12 relativ zu den Auflageleisten 2 abgesenkt werden kann. Die Führungsplatte 16 kann jedoch auch entfallen. Alternativ kann beispielsweise eine gewünschte vertikale Position des Reinigungskopfs 12 in einem Speicher der Vorrichtung 1 hinterlegt sein. Diese vertikale Position des Reinigungskopfes 12 beim Reinigen der Auflageleisten 2 kann dann mittels des Hubwerks gezielt angesteuert werden.

Fig. 2 zeigt das Reinigungswerkzeug 17 des Reinigungskopfes 12. Das Reinigungswerkzeug 17 ragt durch eine Öffnung in der Führungsplatte 16 in vertikaler Richtung 7. Das Reinigungswerkzeug 17 weist zwei sich in Bezug auf eine senkrecht zur Längsrichtung 5 und senkrecht zur vertikalen Richtung 7 verlaufende Querrichtung 18 gegenüberliegende Reinigungsorgane 19 zur Aufnahme einer Auflageleiste 2 der ersten Werkstückauflage 3 auf. Beim Reinigen einer Auflageleiste 2 ragt die betreffende Auflageleiste 2 zwischen die Reinigungsorgane 19 des Reinigungswerkzeugs 17. Dadurch wird der Reinigungskopf 12 beim Reinigen einer Auflageleiste 2 entlang der Auflageleiste 2 geführt. Optional liegt die Führungsplatte 16 auf der zu reinigenden Auflageleiste 2 und benachbarten Auflageleisten 2 auf, wodurch der Reinigungskopf 12 in vertikaler Richtung 7 stabilisiert wird. Der Reinigungskopf 12 der Fig. 2 weist beispielhaft lediglich ein Reinigungswerkzeug 17 auf. Der Reinigungskopf 12 kann jedoch eine Mehrzahl von Reinigungswerkzeugen 17 aufweisen, die beispielsweise in Querrichtung 18 nebeneinander angeordnet sind, um eine Mehrzahl von Auflageleisten 2 gleichzeitig zu reinigen.

Die Reinigungsorgane 19 sind jeweils entlang der Querrichtung 18 und der vertikalen Richtung 7 bewegbar ausgebildet, wodurch die Reinigungsorgane 19 relativ zu quer zur Querrichtung 18 verlaufenden Seitenflächen 20 einer der Auflageleisten 2 bewegbar ausgebildet sind. Dadurch können die Ablagerungen 9 an einer der Auflageleisten 2 mahlend und/oder schabend bearbeitet und durch diese Bearbeitung entfernt werden.

Die Reinigungsorgane 19 können beispielsweise jeweils derart bewegt werden, dass sie in der Ebene, die von der vertikalen Richtung 7 und der Querrichtung 18 aufgespannt wird, entlang eines kreisförmigen oder entlang eines ellipsenförmigen Pfades bewegt werden. Die Reinigungsorgane 19 können jedoch auch entlang anderer Pfade bewegt werden. Wesentlich ist, dass durch die Bewegung der Reinigungsorgane 19 Ablagerungen 9 einer zu reinigenden Auflageleiste 2 mechanisch bearbeitet werden, um diese zu entfernen. Die Reinigungsorgane 19 können beispielsweise gezahnt ausgebildet sein, um die schabende Wirkung auf die Ablagerungen 9 zu erhöhen.

Die Führungsplatte 16 ist mit einer Halterung 21 verbunden. Die Halterung 21 ist an Schwingungsdämpfern 22 befestigt und führt die Führungsplatte 16. Die Schwingungsdämpfer 22 nehmen Vibrationen, die beim Reinigen einer Auflageleiste 2 infolge der mahlenden und schabenden Bewegung der Reinigungsorgane 19 des Reinigungswerkzeugs 17 entstehen, zum grössten Teil auf. Zudem können die Schwingungsdämpfer 22 Unebenheiten der ersten Werkstückauflage 3 ausgleichen und ermöglichen ein gleichmäßiges Nachführen der Führungsplatte. Die Schwingungsdämpfer 22 sind an einer Verbindungsplatte 23 befestigt. Die Verbindungsplatte 23 ist mit zwei Lagerschalen 24 verbunden. Die Lagerschalen 24 weisen ein Kugellager 25 auf, welches Kräfte entlang der vertikalen Richtung 7 und entlang der Querrichtung 18 aufnehmen kann. Der Führungsarm 15 ragt durch die Lagerschalen 24 bzw. wird von diesen umgriffen. Der Reinigungskopf 12 ist mittels des Kugellagers 25 entlang des Führungsarms 15 bewegbar.

Der Bewegungsmechanismus weist neben dem Hubwerk ein Längsfahrwerk zum Bewegen des Reinigungskopfes 12 entlang der Längsrichtung 5 auf, um den Reinigungskopf 12 entlang der Auflageleisten 2 der ersten Werkstückauflage 3 zu bewegen. In der beispielhaften Ausführungsform weist die Vorrichtung 1 den mit der Tragestruktur 10 verbunden Führungsarm 15 auf.

Der Führungsarm 15 ist entlang der Auflageleisten 2 bzw. entlang der Längsrichtung 5 ausrichtbar. Um den Reinigungskopf 12 entlang des Führungsarms 15 bzw. einer zu reinigenden Auflageleiste 2 zu bewegen, ist an dem Reinigungskopf 12 ein Längsfahrwerk angeordnet, welches im vorliegenden Beispiel einen Antriebsmotor M mit einem vom Antriebsmotor M angetriebenen Getriebe G aufweist, wobei das Getriebe G es ermöglicht, Auflageleisten langsam und kraftvoll zu reinigen. Auf einem Getriebeausgang des Getriebes G ist ein (in den Figuren nicht dargestelltes) Antriebszahnrad montiert. Dieses greift in eine sich in Längsrichtung des Führungsarms 15 erstreckende Zahnstange 26 ein. Der Aufbau dieser Zwangsführung garantiert eine sichere Bewegung des Reinigungskopfes 12 entlang der Längsrichtung 5. Sollte sich der Reinigungskopf 12 verklemmen, kann er sich durch Zurückfahren wieder lösen. In Fig. 2 ist lediglich die Zahnstange 26 gezeigt, während das am Getriebeausgang montierte Antriebszahnrad hinter einer der in Fig. 2 dargestellten Lagerschalen 24 des Reinigungskopfes 12 angeordnet und deshalb in Fig. 2 nicht sichtbar ist.

Es ist jedoch nicht zwingend erforderlich, dass der Reinigungskopf 12 das Längsfahrwerk aufweist. Beispielsweise kann alternativ die Tragestruktur 10 das Längsfahrwerk aufweisen, um den Reinigungskopf 12 entlang des Führungsarms 15 zu bewegen. Alternativ kann das Längsfahrwerk auch dazu ausgebildet sein, den Führungsarm 15 entlang der Längsrichtung 5 bzw. entlang der Auflageleisten 2 zu bewegen. In diesem Fall kann der Reinigungskopf 12 fest mit dem Führungsarm 15 verbunden sein. Der Führungsarm 15 kann in einer weiteren alternativen Ausführungsform mittels des Längsfahrwerks teleskopartig ausfahrbar ausgebildet sein, um den Führungsarm entlang der Auflageleisten 2 bzw. der Längsrichtung 5 auszufahren und den Reinigungskopf 12 entlang der Auflageleisten 2 bzw. der Längsrichtung 5 zu bewegen.

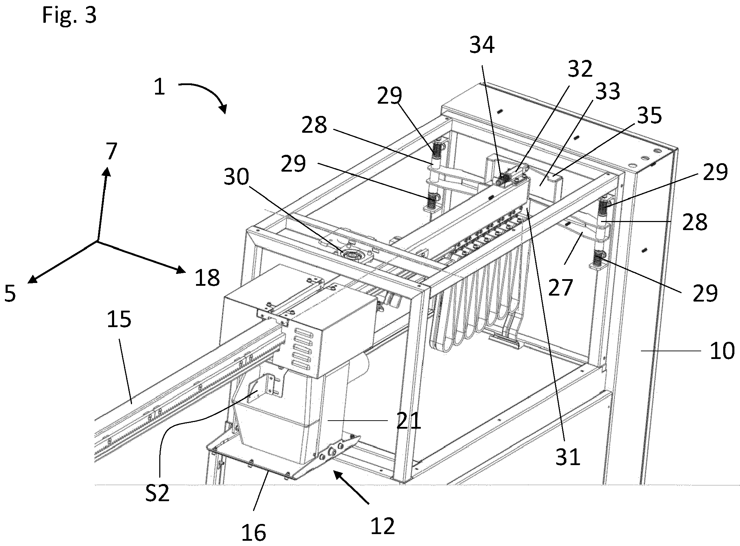

Fig. 3 zeigt schematisch die Tragestruktur 10 mit dem optionalen Führungsarm 15 und dem Reinigungskopf 12 in einer perspektivischen Ansicht. Die Bezugszeichen der Fig. 1 und Fig. 2 werden beibehalten. Das Gehäuse 11 der Tragestruktur 10 ist in Fig. 3 nicht gezeigt. Stattdessen ist lediglich ein Rahmen der Tragestruktur 10 gezeigt, um Elemente im Inneren der Tragestruktur 10 zu erkennen.

Damit sich der mit dem Führungsarm 15 verbundene Reinigungskopf 12 beim Reinigen einer Auflageleiste 2 und bei einer Bewegung entlang der Auflageleiste 2 an Unebenheiten der ersten Werkstückauflage 3 und der Auflageleisten 2 oder der Bodenfläche 8 anpassen kann, ist der Führungsarm 15 an der Tragestruktur 10 innerhalb eines vorgebbaren Raumwinkels schwenkbar gelagert.

Der Führungsarm 15 ist zu diesem Zweck über ein Flanschlager 30 mit der Tragestruktur 10 verbunden. Das Flanschlager 30 bildet einen Drehpunkt des Führungsarms 15. Für einen Höhenausgleich weist die Tragestruktur 10 eine U-Profilführungsschiene 27 auf. Der Führungsarm 15 weist eine Lasche 31 mit einem Kugellager auf, die in der U-Profilführungsschiene 27 führbar ist. Entlang der Querrichtung 18 weist die Tragestruktur 10 beidseitig der U-Profilführungsschiene 27 angeordneten Führungsachsen 28 auf, die sich entlang der vertikalen Richtung 7 und jeweils durch die U-Profilführungsschiene 27 erstrecken. Durch die U-Profilführungsschiene 27 ist der Führungsarm 15 entlang der Querrichtung 18 geführt, kann sich aber entlang der Führungsachsen 28 bzw. der vertikalen Richtung 7 frei bewegen. In vertikaler Richtung 7 auftretende Auslenkungen des Führungsarms 15 werden mit Federn 29 gedämpft, die jeweils entlang der vertikalen Richtung 7 beidseitig der U-Profilführungsschiene 27 entlang der Führungsachsen 28 verlaufend angeordnet sind. Die Federn 29 begrenzen eine vertikale Bewegung des Führungsarms 15. Vertikale Schläge, welche während des Reinigungsprozesses erzeugt werden, übertragen sich über den Führungsarm 15 auf die Federn 29 und werden durch diese gedämpft.

Um den Führungsarm 15 wieder mittig der U-Profilführungsschiene 27 positionieren zu können, wird ein Einrastmechanismus 32 des Führungsarms 15 in ein Führungsblech 33 der Tragestruktur 10 gedrückt. Der Einrastmechanismus 32 weist zudem eine weitere Feder 34 auf, die sich entlang des Führungsarms erstreckt. Im Fall einer Auslenkung des Führungsarms in Querrichtung 18 wird die Feder 34 des Einrastmechanismus 32 zusammengedrückt. Die Feder 34 übt dadurch eine Federkraft auf das Führungsblech 33 aus, wodurch der Führungsarm 15 in eine Ruheposition mittig der U-Profilführungsschiene 27 gedrückt wird. Eine weitere am Führungsblech 33 angeordnete Lasche 35 begrenzt zusätzlich einen Ausschlag des Führungsarms 15 in Querrichtung 18. Bei einer geschwungenen Auflageleiste 2 kann der Reinigungskopf 12 der Auflageleiste 2 folgen und kehrt bei einem Wechsel der Auflageleisete 2 automatisch zurück in die Ruheposition. Durch die Federn 29 und die weitere Feder 34 des Einrastmechanismus 32 können Unregelmässigkeiten über zwei Achsen ausgeglichen werden. Insgesamt ist der Führungsarm 15 dadurch innerhalb eines vorgebbaren Raumwinkels schwenkbar gelagert. Durch diese Flexibilität des Führungsarms 15 verbessert sich die Prozesssicherheit insbesondere beim Reinigen von Auflageleisten 2, welche derart geformt sind, dass sie sich in ihrer Längsrichtung nicht exakt geradlinig erstrecken und demensprechend gekrümmt sind.

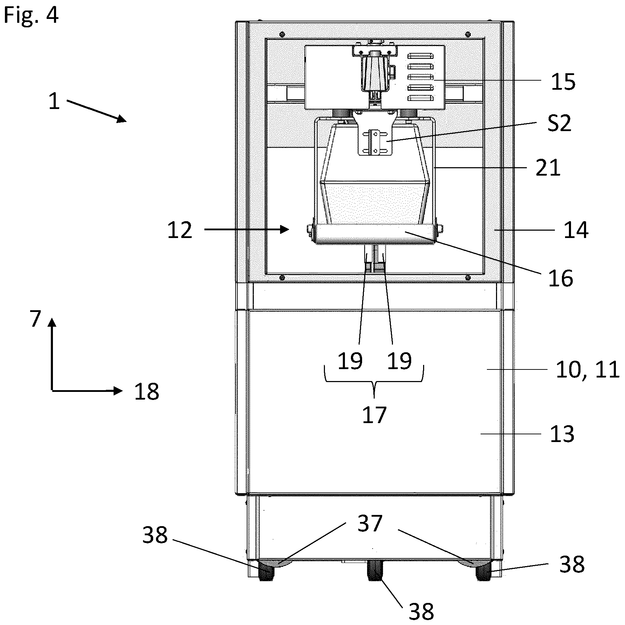

Fig. 4 zeigt schematisch die Vorrichtung 1 in einer Frontansicht auf den Führungsarm 15. Die Bezugszeichen der Fig. 1 bis Fig. 3 werden beibehalten.

Die Tragestruktur 10 weist ein Fahrwerk zum Bewegen der Tragestruktur 10 auf der Bodenfläche 8 am ersten Standort entlang der Querrichtung 18 auf. Dadurch ist die Tragestruktur 10 quer zu den Auflageleisten 2 bzw. quer zur Längsrichtung 5 bewegbar ausgebildet. Der Reinigungskopf 12 kann dadurch von einer Auflageleiste 2 zu einer anderen Auflageleiste 2 bewegt werden, um mehrere Auflageleisten 2 der ersten Werkstückauflage 3 mittels des Reinigungskopfes 12 sukzessive zu reinigen.

Mit Bezugnahme auf Fig. 1 ist die Tragestruktur 10 zum Bewegen entlang der Querrichtung 18 an eine auf einer Basis angeordnete und sich entlang der Querrichtung 18 erstreckende Führungsschiene 36 koppelbar ausgebildet. In Fig. 4 ist lediglich die Vorrichtung 1 gezeigt, während die Führungsschiene 36 der Übersicht halber nicht gezeigt ist. Die Führungsschiene 36 ist in Fig. 1 beispielhaft auf der Bodenfläche 8 angeordnet. In diesem Fall bildet die Bodenfläche 8 die Basis. Die Führungsschiene 36 kann jedoch auch auf einem Teil der ersten Werkstückauflage 3 oder auf einem Teil der ersten Laserschneidmaschine 4 angeordnet sein. In diesem Fall wird die Basis durch einen Teil der ersten Werkstückauflage 3 oder der ersten Laserschneidmaschine 4 gebildet, etwa durch eine Gehäusewandung der ersten Laserschneidmaschine 4.

Durch die Führungsschiene 36 kann die Tragestruktur 10 entlang der Querrichtung 18 geführt werden. Eine Führungsschiene 36 ist jedoch nicht zwingend erforderlich, um die Tragestruktur 10 entlang der Querrichtung 18 zu führen. Eine Bewegung der Tragestruktur 10 entlang der Querrichtung 18 kann beispielsweise auch programmiert sein. Die Tragestruktur 10 kann alternativ auch entlang eines Laserstrahls führbar ausgebildet sein, um die Tragestruktur 10 entlang der Querrichtung 18 zu bewegen. Wesentlich ist, dass die Tragestruktur 10 und damit der Reinigungskopf 12 mittels des Fahrwerks entlang der Querrichtung 18 bewegbar ist.

Im vorliegenden Beispiel umfasst das Fahrwerk der Vorrichtung 1 zwei Führungsrollen 37 zur Kopplung der Tragestruktur 10 an die Führungsschiene 36 weist die Vorrichtung 1. Die Vorrichtung 1 kann auch lediglich eine Führungsrolle 37 oder auch mehr als zwei Führungsrollen 37 aufweisen. Die Führungsrollen 37 sind an einer der Bodenfläche 8 zugewandten Unterseite der Tragestruktur 10 angeordnet. Die Tragestruktur 10 weist einen Hebe-/ Senkmechanismus zum Absenken der Führungsrollen 37 auf die Führungsschiene 36 und zum Anheben der Führungsrollen 37 von der Führungsschiene 36 auf. Im dargestellten Zustand der Fig. 4 sind die Führungsrollen 37 angehoben.

Um ein Verfahren der Tragestruktur 10 auf der Bodenfläche 8 zu ermöglichen, umfasst das Fahrwerk der Vorrichtung 1 zumindest drei an einer Unterseite Tragestruktur 10 angeordnete Rollen 38, wodurch die Tragestruktur 10 auf der Bodenfläche 8 verfahrbar ausgebildet ist. Zumindest eine Rolle 38 sollte um die vertikale Richtung 7 drehbar ausgebildet sein, damit die Tragestruktur 10 gewendet und ausgerichtet werden kann. Werden die Führungsrollen 37 auf die Führungsschiene 36 aufgesetzt, so kann es sein, dass zumindest eine der Rollen 38 von der Bodenfläche 8 abhebt. Dies betrifft insbesondere im Bereich der Führungsrollen 37 angeordnete Rollen 38. Diese Rollen 38 müssen nicht notwendigerweise um die vertikale Richtung 7 drehbar ausgebildet sein. Sie können auch starr mit der Tragestruktur 10 verbunden sein.

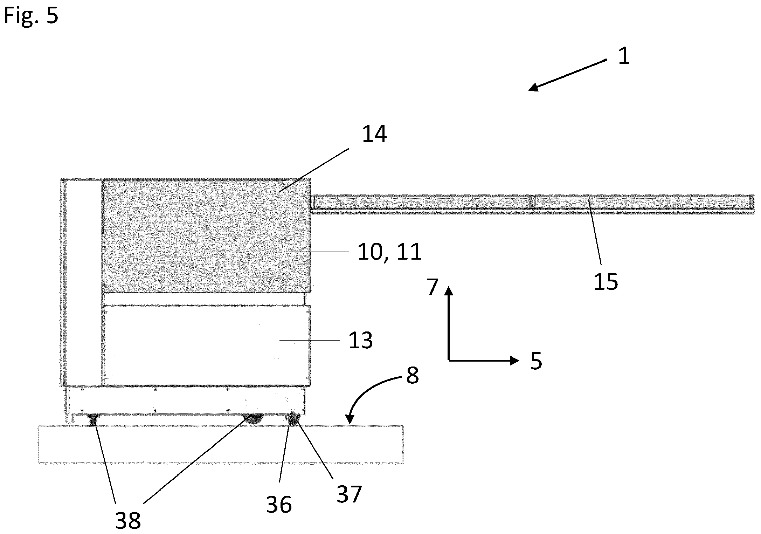

Fig. 5 zeigt schematisch die Vorrichtung 1 der Fig. 4 in einer Seitenansicht. Die Bezugszeichen der Fig. 4 werden beibehalten.

Fig. 5 zeigt die Vorrichtung 1 in einem Zustand, bei dem die Führungsrollen 37 auf die Führungsschiene 36 aufgesetzt sind. Zur Kopplung der Führungsrollen 37 an die Führungsschiene 36 weisen die Führungsrollen 37 Kerben auf. Die Kerben sind zur Aufnahme der Führungsschiene 36 vorgesehen. Dadurch bleiben die Führungsrollen 37 beim Bewegen der Tragestruktur 10 entlang der Querrichtung 18 an die Führungsschiene 36 gekoppelt.

Beim Absenken der Führungsrollen 37 auf die Führungsschiene 36 wird ein Teil der Tragestruktur 10 im Bereich der Führungsrollen 37 angehoben. Auf diese Weise kann ein möglichst grosser Druck auf die Führungsschiene 36 erzeugt werden, damit die Tragestruktur 10 an der Führungsschiene 36 besser geführt wird. Zumindest eine der Rollen 38 und/oder die zumindest eine Führungsrolle 37 sind mittels eines (in den Figuren nicht dargestellten) Antriebs antreibbar sein, um die Tragestruktur 10 entlang der Führungsschiene 36 zu bewegen und zu führen.

Die Tragestruktur 10 kann einen (in den Figuren nicht dargestellten) ersten Sensor (beispielsweise einen ersten optischen Sensor) aufweisen, der derart positioniert ist, dass er über der Führungsschiene 36 angeordnet ist, wenn die Tragestruktur 10 an die Führungsschiene 36 gekoppelt ist. Der erste Sensor ist dazu ausgebildet, zu überwachen, ob die Tragestruktur 10 wie vorgesehen entlang der Führungsschiene 36 geführt wird. In Verlängerung einer jeweils letzten Auflageleiste 2 der ersten Werkstückauflage 3 weist die Führungsschiene 36 eine Ausnahme auf. Diese kann vom ersten Sensor erfasst werden, woraufhin ein Reinigungsprozess beendet werden kann. Auf diese Weise kann bei einer Fehleingabe im Rahmen einer Programmierung der Vorrichtung 1 verhindert werden, dass die Tragestruktur 10 an einem Ende der Führungsschiene 36 von der Führungsschiene 36 abkommt.

Die Vorrichtung 1 kann zusätzlich einen Drehgeber für das Fahrwerk aufweisen. Der Drehgeber ist dazu ausgebildet, eine von der Tragestruktur 10 zurückgelegte Distanz zu erfassen. Bei einer Bewegung der Tragestruktur 10 kann zunächst zur Steuerung der Tragestruktur 10 entlang der Querrichtung 18 lediglich die zurückgelegte Distanz relevant sein. Somit können Störkonturen oder verkrümmte Auflageleisten 2 zunächst vernachlässigt werden. Nach einer vorgebbaren Distanz, die im Wesentlichen einem Abstand zwischen zwei unmittelbar benachbarten Auflageleisten 2 entspricht, kann ein am Reinigungskopf 12 angeordneter zweiter Sensor S2 (beispielsweise ein Laser-Sensor) zur Detektion einer der Auflageleisten 2 verwendet werden, um die Bewegung der Tragestruktur 10 zu steuern. Sobald der zweite Sensor S2 eine Auflageleiste 2 erfasst, wird die Bewegung der Tragestruktur 10 entlang der Querrichtung 18 gestoppt. So kann verhindert werden, dass der Reinigungskopf 12 bereits zwischen den Auflagenleisten 2 mit dem Reinigungsprozess beginnt.

Eine gewünschte Reinigungslänge entlang der Querrichtung 18 kann vor oder während des Reinigungsprozesses eingestellt werden. Werden lediglich kleine Werkstücke mit der ersten Laserschneidmaschine 4 bearbeitet, welche nicht die ganze Fläche der ersten Werkstückauflage 3 abdecken, muss diese auch nicht vollständig gereinigt werden. So kann die Zeit der Reinigung und ein Stillstand des Reinigungsprozesses minimiert werden. Die Reinigungslänge wird ermittelt indem bei jeder Seitwärtsbewegung, die Distanz zwischen den Auflageleisten 1 addiert wird. Entspricht eine Gesamtlänge der Bewegung der Tragestruktur 10 entlang der Querrichtung 18 einer vorgebbaren Länge, wird das Reinigungsprogramm abgebrochen.

Eine Vorschubgeschwindigkeit des Reinigungskopfes 12 entlang der Längsrichtung 5 kann während des Reinigungsprozesses angepasst werden. Eine Steuerung der Vorrichtung 1 ist dazu ausgebildet, einen Ausgabewert zu ermitteln, auf Basis dessen eine Leistung für den Antriebsmotor M des Längsfahrwerks einstellbar ist. Der Antriebsmotor M kann einen Drehgeber aufweisen. Der Drehgeber wird verwendet, um bei einer Bewegung des Reinigungskopfes 12 in der Längsrichtung des Führungsarms 15 eine momentane Position und eine Geschwindigkeit des Reinigungskopfes 12 mit Bezug auf die Längsrichtung des Führungsarms 15 zu erfassen. Für die Steuerung des Reinigungskopfes 12 entlang der Längsrichtung 5 kann ein vorgebbares Geschwindigkeitsprofil des Reinigungskopfes 12 in einem Speicher der Vorrichtung 1 hinterlegt sein. Auf Basis des Geschwindigkeitsprofils kann ein Sollwert für den Drehgeber ermittelt werden. Dieser Sollwert kann mit einem erfassten Wert des Drehgebers verglichen werden. Wird eine Abweichungstoleranz unterschritten, wechselt die Drehrichtung des Motors. Im Fall eines weiteren Kraftanstiegs schaltet die Vorrichtung 1 aus. Verklemmt sich der Reinigungskopf 12 in einer Auflageleiste 2, keine eine Bewegungsrichtung des Reinigungskopfes 12 geändert werden.

Wird ein erneutes Verklemmen beim Zurückfahren detektiert, wird die Bewegungsrichtung erneut geändert. Der Reinigungskopf 12 kann entlang der Längsrichtung 5 und entlang einer Auflageleiste 2 bewegt werden, bis eine vorgebbare Reinigungstiefe erreicht wird. Der Vorgang der Bewegungsrichtungsumkehr kann sich beispielsweise bis zu drei Mal wiederholen. Kann sich der Reinigungskopf 12 nach dem dritten Versuch nicht befreien, so wird das Reinigungsprogramm unterbrochen.

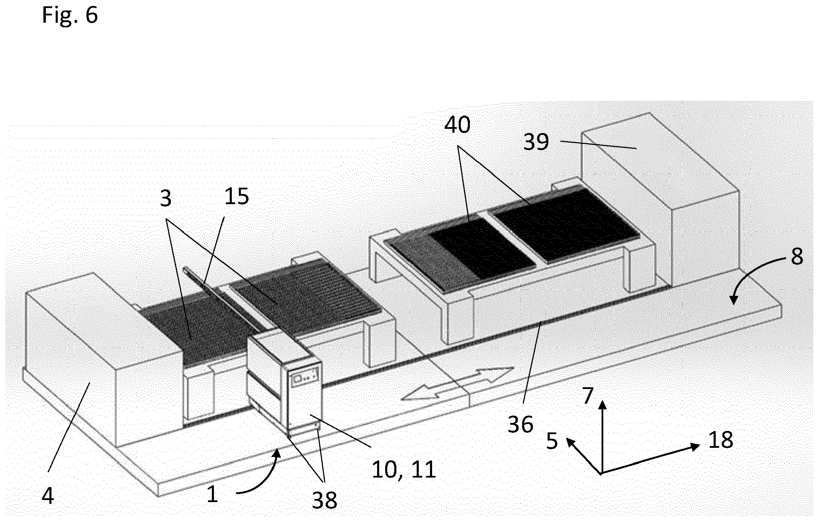

Fig. 6 zeigt in einer perspektivischen Ansicht die Vorrichtung 1 am ersten Standort der ersten Laserschneidmaschine 4 und eine zweite Laserschneidmaschine 39, welche an einem von ersten Standort der ersten Laserschneidmaschine 4 entfernten zweiten Standort angeordnet ist. Alle bisherigen Bezugszeichen werden im Folgenden beibehalten.

Die Tragestruktur 10 ist mittels des Fahrwerks derart über die Bodenfläche 8 verfahrbar, dass die Tragestruktur 10 zum ersten Standort der ersten Laserschneidmaschine 4 hin verfahrbar ausgebildet ist, um Auflageleisten 2 der ersten Werkstückauflage 3 der ersten Laserschneidmaschine zu reinigen, und dass die Tragestruktur 10 vom ersten Standort der ersten Laserschneidmaschine 4 weg verfahrbar ausgebildet ist, um die Tragestruktur 10 zu dem zweiten Standort der zweiten Laserschneidmaschine 39 zu verfahren und Auflageleisten 2 einer zweiten Werkstückauflage 40 der zweiten Laserschneidmaschine 39 zu reinigen. Dadurch ist die Tragestruktur 10 mit Reinigungskopf 12 räumlich mobil ausgebildet und standortunabhängig. Lediglich beispielhaft ist in Fig. 6 gezeigt, dass an der Bodenfläche 8 für die erste Laserschneidmaschine 4 und für die zweite Laserschneidmaschine 39 eine gemeinsame Führungsschiene 36 vorgesehen ist. Dies ist jedoch nicht zwingend erforderlich. Vielmehr kann auch eine separate Führungsschiene für die zweite Laserschneidmaschine 39 vorgesehen sein. Grundsätzlich sind Führungsschienen 36 nicht erforderlich. Die Tragestruktur 10 kann mittels des Fahrwerks und ohne eine Führungsschiene 36 zur ersten Laserschneidmaschine 4 und zur zweiten Laserschneidmaschine 39 hin verfahrbar und von ihnen weg verfahrbar sein.

Vorteilhafterweise kann die Vorrichtung 1 standortunabhängig betrieben werden. Zudem sind die Bewegungen des Reinigungskopfes 12 und der Tragestruktur 10 vollständig automatisiert, wodurch der gesamte Reinigungsprozess automatisiert durchgeführt werden kann. Für das Hubwerk, das Längsfahrwerk und das Fahrwerk sind jeweils Elektromotoren vorgesehen, die im Reinigungskopf 12 und/oder an oder in der Tragestruktur 10 angeordnet sind und eine automatisierte Bewegung in alle erforderlichen Richtungen ermöglichen.

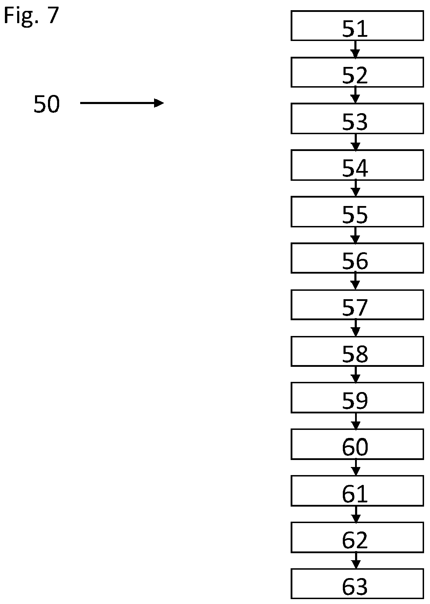

Fig. 7 zeigt schematisch Verfahrensschritte 51, 52, 53, 54, 55, 56, 57, 58, 59, 60, 61, 62, 63 eines Verfahrens 50 zum Reinigen von Auflageleisten 2 der ersten Werkstückauflage 3 der ersten Laserschneidmaschine 4 mittels einer Vorrichtung 1 gemäß der Figuren 1 bis 6.

Im Rahmen eines ersten Verfahrensschritts 51 wird die Tragestruktur 10 zum ersten Standort der ersten Laserschneidmaschine 4 hin verfahren. Bei einem zweiten Verfahrensschritt 52 wird die Tragestruktur 10 derart ausgerichtet, dass der Reinigungskopf 12 entlang der Auflageleisten 2 bewegbar ist. Bei einem dritten Verfahrensschritt 53 wird der Reinigungskopf 12 auf die Auflageleisten 2 der ersten Werkstückauflage 3 der ersten Laserschneidmaschine 4 mittels des Hubwerks aufgesetzt. Dabei kommt das Reinigungswerkzeug 17 mit einer Auflageleiste 2 in Kontakt bzw. die Auflageleiste greift in die Reinigungsorgane 19 des Reinigungswerkzeugs 17 ein. Bei einem vierten Verfahrensschritt 54 wird der Reinigungskopf 12 entlang der Auflageleiste 2 mittels des Längsfahrwerks bewegt, wobei die Auflagenleiste 2 gereinigt wird.

Im Folgenden werden lediglich optionale Verfahrensschritte 55, 56, 57, 58, 59, 60, 61, 62, 63 erläutert. In einem fünften Verfahrensschritt 55 erfolgt ein Abheben des Reinigungskopfes 12 von den Auflageleisten 2 mittels des Hubwerks. In einem sechsten Verfahrensschritt 56 wird die Tragestruktur 10 entlang der Querrichtung 18 mittels des Fahrwerks bewegt, wobei der Reinigungskopf zu einer weiteren Auflageliste 2 hinbewegt wird. Dabei kann die Tragestruktur 10 beispielswiese entlang der Führungsschiene 36 bewegt und geführt werden, die entlang der Querrichtung 18 verlaufend angeordnet ist. In einem siebten Verfahrensschritt 57 wird der Reinigungskopf 12 auf die Auflageleisten 2 der Werkstückauflage 3 der ersten Laserschneidmaschine 4 mittels des Hubwerks aufgesetzt, wobei das Reinigungswerkzeug 17 mit einer weiteren Auflageleiste 2 in Kontakt kommt. In einem achten Verfahrensschritt 58 wird der Reinigungskopf 12 entlang der weiteren Auflageleiste 2 mittels des Längsfahrwerks bewegt, wobei die weitere Auflagenleiste 2 gereinigt wird.

In einem neunten Verfahrensschritt 59 erfolgt ein Anheben des Reinigungskopfes 12 von der ersten Werkstückauflage 3 der ersten Laserschneidmaschine 4 mittels des Hubwerks. In einem zehnten Verfahrensschritt 60 wird die Tragestruktur 10 hin zu der zweiten Laserschneidmaschine 39 verfahren. In einem elften Verfahrensschritt 61 erfolgt ein Ausrichten der Tragestruktur 10, derart, dass der Reinigungskopf 12 entlang von Auflageleisten 2 der zweiten Werkstückauflage 40 der zweiten Laserschneidmaschine 39 bewegbar ist. In einem zwölften Verfahrensschritt 62 wird der Reinigungskopf 12 auf eine Auflageleiste 2 der zweiten Werkstückauflage 40 der zweiten Laserschneidmaschine 39 mittels des Hubwerks aufgesetzt, wobei das Reinigungswerkzeug 17 mit einer Auflageleiste 2 der zweiten Werkstückauflage 40 in Kontakt kommt. In einem dreizehnten Verfahrensschritt 63 wird der Reinigungskopf 12 entlang der Auflageleiste 2 der zweiten Werkstückauflage 40 der zweiten Laserschneidmaschine 39 mittels des Längsfahrwerks bewegt, wobei Ablagerungen 9 von der Auflagenleiste 2 entfernt werden.

## Patentansprüche

1. Vorrichtung (1) zum Reinigen von Auflageleisten (2) einer ersten Werkstückauflage (3) einer ersten Laserschneidmaschine (4),
wobei sich die erste Laserschneidmaschine (4) an einem vorgebbaren ersten Standort befindet,
wobei die erste Werkstückauflage (3) der ersten Laserschneidmaschine (4) eine Mehrzahl von im Wesentlichen parallel zueinander verlaufend angeordneten und jeweils sich entlang einer Längsrichtung (5) erstreckenden Auflageleisten (2) zum Auflegen eines Werkstücks aufweist, wobei die Vorrichtung (1) eine einen Reinigungskopf (12) mit einem Reinigungswerkzeug (17) zum Reinigen der Auflageleisten (2) der ersten Werkstückauflage (3) tragende Tragestruktur (10) und einen Bewegungsmechanismus zum Bewegen des Reinigungskopfes (12) relativ zur Tragestruktur (10) aufweist,
wobei der Bewegungsmechanismus ein Hubwerk zum Heben und Senken des Reinigungskopfes (12) in einer vertikalen Richtung (7) aufweist, um den Reinigungskopf (12) auf die Auflageleisten (2) der ersten Werkstückauflage (3) aufzusetzen, sodass eine Auflageleiste (2) mit dem Reinigungswerkzeug (17) in Kontakt kommt, und um den Reinigungskopf (12) nach dem Reinigen der Auflageleiste (2) von den Auflageleisten (2) der ersten Werkstückauflage (3) abzuheben,
wobei der Bewegungsmechanismus ein Längsfahrwerk (M, G) zum Bewegen des Reinigungskopfes (12) entlang der Längsrichtung (5) aufweist, um den Reinigungskopf (12) entlang der Auflageleisten (2) der ersten Werkstückauflage (3) zu bewegen,
wobei die Tragestruktur (10) ein Fahrwerk (37, 38) zum Bewegen der Tragestruktur (10) auf einer Bodenfläche (8) am ersten Standort entlang einer quer zur Längsrichtung (5) verlaufenden Querrichtung (18) aufweist, wodurch die Tragestruktur quer zu den Auflageleisten (2) bewegbar ausgebildet ist, um den Reinigungskopf (12) von Auflageleiste (2) zu Auflageleiste (2) zu bewegen, sodass mehrere Auflageleisten (2) der ersten Werkstückauflage (3) mittels des Reinigungskopfes (12) sukzessive gereinigt werden können,
wobei die Tragestruktur (10) mittels des Fahrwerks (37, 38) derart über die Bodenfläche (8) verfahrbar ist, dass die Tragestruktur (10) zum ersten Standort der ersten Laserschneidmaschine (4) hin verfahrbar ausgebildet ist, um Auflageleisten (2) der ersten Werkstückauflage (3) der ersten Laserschneidmaschine (4) zu reinigen, und dass die Tragestruktur (4) vom ersten Standort der ersten Laserschneidmaschine (4) weg verfahrbar und zu einem vorgebbaren zweiten Standort einer zweiten Laserschneidmaschine (39) hin verfahrbar ist, um mittels des Reinigungskopfes (12) Auflageleisten (2) einer zweiten Werkstückauflage (40) der zweiten Laserschneidmaschine (39) zu reinigen.

2. Vorrichtung (1) gemäß Anspruch 1,
wobei der Reinigungskopf (12) eine Führungsplatte (16) zur Auflage des Reinigungskopfs (12) auf den Auflageleisten (2) aufweist.

3. Vorrichtung (1) gemäß Anspruch 1 oder 2,
aufweisend einen mit der Tragestruktur (10) verbundenen und entlang der Auflageleisten (2) ausrichtbaren Führungsarm (15),
wobei der Reinigungskopf (12) am Führungsarm (15) derart geführt ist, dass der Reinigungskopf (12) mittels des Längsfahrwerks (M, G)entlang des Führungsarms (15) bewegbar ist.

4. Vorrichtung (1) gemäß Anspruch 3,
wobei der Führungsarm (15) an der Tragestruktur (10) innerhalb eines vorgebbaren Raumwinkels schwenkbar gelagert ist.

5. Vorrichtung (1) gemäß einem der vorhergehenden Ansprüche, wobei das Reinigungswerkzeug (17) des Reinigungskopfes (12) zwei sich in Bezug auf die Querrichtung (18) gegenüberliegende Reinigungsorgane (19) zur Aufnahme einer der Auflageleisten (2) aufweist,
wobei die Reinigungsorgane (19) jeweils entlang der Querrichtung (18) und der vertikalen Richtung (7) bewegbar ausgebildet sind, wodurch die Reinigungsorgane (19) relativ zu quer zur Querrichtung (18) verlaufenden Seitenflächen (20) der einen der Auflageleisten (2) bewegbar ausgebildet sind, um Ablagerungen (9) an der einen der Auflageleisten (2) mahlend und/oder schabend zu bearbeiten.

6. Vorrichtung (1) gemäß einem der vorhergehenden Ansprüche, wobei die Tragestruktur (10) zum Bewegen entlang der Querrichtung (18) an eine auf einer Basis (8) angeordnete und sich entlang der Querrichtung (18) erstreckende Führungsschiene (36) koppelbar ist.

7. Vorrichtung (1) gemäß Anspruch 6,
wobei das Fahrwerk zumindest eine an einer der Bodenfläche (8) zugewandten Unterseite der Tragestruktur (10) angeordnete Führungsrolle (37) umfasst, welche derart an die Führungsschiene (37) koppelbar ist, dass die Tragestruktur (10) mittels der Führungsrolle (37) an der Führungsschiene (37) geführt in Längsrichtung der Führungsschiene (37) bewegbar ist.

8. Vorrichtung (1) gemäß Anspruch 7,
wobei die Tragestruktur (10) einen Hebe-/ Senkmechanismus zum Absenken der Führungsrolle (37) auf die Führungsschiene (36) und zum Anheben der Führungsrolle (37) von der Führungsschiene (36) aufweist.

9. Vorrichtung (1) gemäß einem der vorhergehenden Ansprüche, wobei das Fahrwerk zumindest drei an einer der Bodenfläche (8) zugewandten Unterseite der Tragestruktur (10) angeordnete Rollen (38) zum Verfahren der Tragestruktur (10) auf der Bodenfläche (8) umfasst.

10. Vorrichtung (1) gemäß einem der Ansprüche 6 bis 9,
wobei zumindest eine der Rollen (38) und/oder die zumindest eine Führungsrolle (37) mittels eines Antriebs antreibbar ist, um die Tragestruktur (10) entlang der Führungsschiene (36) zu bewegen.

11. Verfahren (50) zum Reinigen von Auflageleisten (2) einer ersten Werkstückauflage (3) einer ersten Laserschneidmaschine (4) mittels einer Vorrichtung (1) gemäß einem der vorhergehenden Ansprüche mit folgenden Verfahrensschritten (51, 52, 53, 54) :
- Verfahren der Tragestruktur (10) zum ersten Standort der ersten Laserschneidmaschine (4),
- Ausrichten der Tragestruktur (10), derart, dass der Reinigungskopf (12) entlang der Auflageleisten (2) bewegbar ist,
- Aufsetzen des Reinigungskopfes (12) auf die Auflageleisten (2) der ersten Werkstückauflage (3) der ersten Laserschneidmaschine (4) mittels des Hubwerks, sodass das Reinigungswerkzeug (17) mit einer der Auflageleisten (2) in Kontakt kommt,
- Bewegen des Reinigungskopfes (12) entlang der einen der Auflageleisten (2) mittels des Längsfahrwerks, wobei die eine der Auflagenleisten (2) gereinigt wird.

12. Verfahren (50) gemäß Anspruch 11 mit folgenden weiteren Verfahrensschritten (55, 56, 57, 58):
- Abheben des Reinigungskopfes (12) von den Auflageleisten (2) mittels des Hubwerks,
- Bewegen der Tragestruktur (10) entlang der Querrichtung (18) mittels des Fahrwerks, wobei der Reinigungskopf (12) zu einer anderen der Auflagelisten (2) hinbewegt wird,
- Aufsetzen des Reinigungskopfes (12) auf die Auflageleisten (2) der Werkstückauflage (3) der ersten Laserschneidmaschine (4) mittels des Hubwerks, wobei das Reinigungswerkzeug (12) mit der anderen der Auflageleisten (2) in Kontakt kommt,
- Bewegen des Reinigungskopfes (12) entlang der anderen der Auflageleisten (2) mittels des Längsfahrwerks, wobei die andere der Auflagenleisten (2) gereinigt wird.

13. Verfahren (50)gemäß einem der Ansprüche Anspruch 11 bis 12 mit folgenden weiteren Verfahrensschritten (59, 60, 61, 62, 63) :
- Abheben des Reinigungskopfes (12) von der ersten Werkstückauflage (3) der ersten Laserschneidmaschine (4) mittels des Hubwerks,
- Verfahren der Tragestruktur (10) hin zu der zweiten Laserschneidmaschine (39),
- Ausrichten der Tragestruktur (10), derart, dass der Reinigungskopf (12) entlang von Auflageleisten (2) der zweiten Werkstückauflage (40) der zweiten Laserschneidmaschine (39) bewegbar ist,
- Aufsetzen des Reinigungskopfes (12) auf eine der Auflageleisten (2) der zweiten Werkstückauflage (40) der zweiten Laserschneidmaschine (39) mittels des Hubwerks, wobei das Reinigungswerkzeug (12) mit der einen der Auflageleisten (2) der zweiten Werkstückauflage (40) in Kontakt kommt,
- Bewegen des Reinigungskopfes (12) entlang der einen der Auflageleisten (2) der zweiten Werkstückauflage (40) der zweiten Laserschneidmaschine (39) mittels des Längsfahrwerks, wobei Ablagerungen (9) von der einen der Auflagenleisten (2) der zweiten Werkstückauflage (40) entfernt werden.
